# EUROPEAN PATENT APPLICATION

(11) **EP 4 571 902 A1**
(43) Date of publication of application: **18.06.2025**
(21) Application number: 23216116.6
(22) Date of filing: 13.12.2023
(51) Int. Cl.: H01M 8/0263, H01M 8/12, H01M 8/1018, H01M 8/0204, H01M 8/10

(54) **FUEL CELL FLOW PLATE**

(71) Applicant: PowerUP Fuel Cells OÜ, 12618 Tallinn (EE)
(72) Inventor: Kruusenberg, Ivar, Talinn (EE); Chadha, Kush, Tallinn (EE); Lamibrac, Adrien, Tallinn (EE); Biswas, Nayan, Tallinn (EE)
(74) Representative: Bird & Bird LLP - Hamburg

(57) **Abstract**

Described is a flow plate (10) for a fuel cell. The flow plate comprises a substrate (12) comprising a flow inlet (16) and a flow outlet (18), as well as a flow field (14) in fluid communication with both the flow inlet (16) and the flow outlet (18) comprising a plurality of flow channels. The plurality of flow channels comprises at least two serpentine channels, each of the at least two serpentine channels defining a channel inlet and a channel outlet and comprising at least one curved section inducing a change in the flow direction in the respective serpentine channel, and the plurality of flow channels also comprises an interdigitated channel extending between the at least two serpentine channels, and defining a channel inlet and a closed channel end.

## Description

### FIELD

Described is a flow plate for a fuel cell and a method for operation thereof.

### BACKGROUND

A fuel cell is an electrochemical device that converts the chemical energy of a fuel, such as hydrogen, directly into electrical energy through a chemical reaction with an oxidizing agent, usually oxygen from air. There are several types of fuel cell, PEM is one such type. Proton Exchange Membrane (PEM) fuel cell is a type of fuel cell that uses a polymer electrolyte membrane as its electrolyte. It operates at relatively low temperature 60-80 °C and allows quick start up. In a PEM fuel cell, hydrogen is supplied to an anode where it is split to protons and electrons. The protons pass through electrolyte membrane to a cathode, while electrons flow through an external circuit, creating electrical current. The only byproducts are water and heat.

In brief, a flow field plate in a fuel cell helps control the flow of reactants, such as hydrogen and oxygen, to the electrodes where the chemical reactions occur. It is a crucial component that distributes these gases evenly across the surface of electrodes, ensuring efficient and uniform reactions. The design of the flow field is important as it impacts the distribution of gases, the removal of water produced during the reaction, and overall cell performance.

One type of fuel cell flow field plate is known as an interdigitated flow plate. Interdigitated flow plates are used in certain types of fuel cells, specifically proton exchange membrane fuel cells (PEMFCs) and solid oxide fuel cells (SOFCs).

The term *"interdigitated"* refers to the design of these plates, which typically have a comblike structure comprising an array of interdigitated channels extending from a first and second end of the flow plate. The purpose of these plates is to enhance the distribution and flow of reactant gases across electrodes. By providing a pattern of alternating channels that interlock between the anode and cathode, and the interdigitated design improves gas distribution. In PEMFCs, these plates are often made of materials like graphite or metal coated with a protective coating, and they are used to distribute hydrogen gas (the fuel) and oxygen (from the air) to the membrane electrode assembly (MEA) where electrochemical reactions take place to produce electricity. In SOFCs, interdigitated plates help distribute fuel (typically hydrogen or hydrocarbons) and oxygen across the cell to promote the electrochemical reactions.

The interdigitated design provides a greater surface area to allow for higher gas diffusion and assists to improve the efficiency of fuel cell reactions. It mainly works by providing dead-end to the channel. The reactants are forced to pass through the gas diffusion layer. It also assists in the even distribution of reactants across the fuel cell, optimizing the electrochemical process. However, the interdigitated design may be relatively complex to manufacture due to the intricate nature of the interdigitated channels, and the associated need for manufacture of the channels to high tolerances. The phenomenon of crossflow may occur between the interdigitated channels, which improves distribution. An excess of crossflow between the interdigitated channels may have a damaging effect on the fuel cell as it forces the reactant to pass through.

Another design of flow plate is a serpentine design. According to this design, a channel or channels are provided on the flow plate that have a winding, repeating S-shape pattern comprising at least one, or a plurality of, turns. Similar to the interdigitated design, this design may also provide a relatively high surface area. In addition, serpentine designs can be relatively compact, which may make this design a good alternative to the interdigitated design in cases where space is limited. Further, the phenomenon of crossflow is less common with serpentine designs, thereby also providing an advantage over the interdigitated design for this reason.

However, due to the turning and winding of the channel or channels, it results in a significant pressure drop between the inlet and outlet of the channel or channels of a serpentine design. This may have a detrimental effect on the efficiency of a flow plate used having the serpentine design.

There is therefore a need for a flow plate that solves the aforementioned problems.

### SUMMARY

According to the present disclosure a first aspect relates to a flow plate for a fuel cell. The flow plate comprises a substrate comprising a flow inlet and a flow outlet, and a flow field in fluid communication with both the flow inlet and the flow outlet comprising a plurality of flow channels. The plurality of flow channels comprises at least two serpentine channels, where each of the at least two serpentine channels defines a channel inlet and a channel outlet and comprises at least one curved section inducing a change in the flow direction in the respective serpentine channel, and the plurality of flow channels comprises an interdigitated channel extending between the at least two serpentine channels, and defining a channel inlet and a closed channel end.

In some examples, a first half of each of each of the plurality of serpentine channels may define an inlet portion, and a second half of each of the plurality of serpentine channels may define an outlet portion, where the interdigitated channel is located adjacent the outlet portion of two of the at least two serpentine channels.

In some examples, each of the at least two serpentine channels may comprise at least two straight sections fluidly connected by the at least one curved section, and the interdigitated section may comprise a straight section.

In some examples, each of the at least two serpentine channels may comprise three straight sections connected by two curved sections, and the interdigitated channel may contain a single straight section.

According to some examples, the straight sections of the at least two serpentine channels may be parallel to the straight section of the interdigitated channel.

According to some examples, each of the two curved sections may induce a change in the flow direction of 180 degrees.

According to some examples, the flow plate may comprise an inlet channel fluidly connecting the flow field to the flow inlet, and may comprise an outlet channel fluidly connecting the flow field to the flow outlet.

According to some examples, the flow plate may comprise a plurality of inlet channels defining an inlet manifold, and may comprising a plurality of outlet channels defining an outlet manifold.

According to some examples, the flow plate may comprise a plurality of interdigitated channels and at least four serpentine channels. Each of the plurality of interdigitated channels may be located between two of the at least four serpentine channels.

According to some examples, the number of serpentine channels may be double the number of interdigitated channels.

According to some examples, the channel inlet of the interdigitated channel may be located closer to the inlet than the outlet.

According to some examples, the channel inlet of the interdigitated channel may be located closer to the outlet than the inlet.

According to some examples, the interdigitated channel may extend in a flow direction, and the flow inlet and flow inlet may be separated along the flow direction.

A second aspect relates to a method of operation of a fuel cell, comprising providing a fuel cell comprising a flow plate according to the first aspect, flowing a fuel into the flow inlet of the flow plate and into the flow field of the fuel cell, and flowing a fuel simultaneously into the at least two serpentine channels and the interdigitated channel of the fuel cell.

### BRIEF DESCRIPTION

- Figure 1: is a schematic illustration of a fuel cell;
- Figure 2: is an example of a first flow plate;
- Figure 3: is a second example of a flow plate;
- Figure 4A & 4B: show the flow plate of Figure 1 with different inlet and outlet designs.

### DETAILED DESCRIPTION

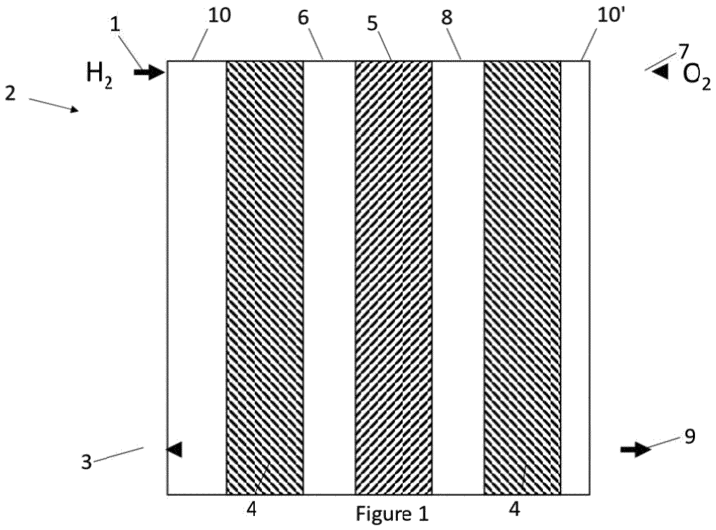

Figure 1 is a schematic illustration of a fuel cell 2 shown in cross-section. Here, it can be seen that the fuel cell 2 is effectively made up of several layers. Flow plates 10 are illustrated as the outermost layer in Figure 1. Flow field plates 10, 10' are compressed together by current collector and end plates, which are not shown in the figure. Adjacent the flow plates is located a diffusion layer 4, where (in this example) gas from a fuel source (e.g. hydrogen gas) may diffuse through the fuel cell and combine with oxygen or air, for example, to produce water and heat. Adjacent the diffusion layer 4 and located on the opposite side to the flow plate 10 is a catalyst layer (as illustrated, an anode-side electrode 6) and adjacent the diffusion layer 4 and located on the opposite side to the flow plate 10' is a catalyst layer (as illustrated, a cathode-side electrode 8), which in this example are electrically connected.

Electrons are transferred between the electrodes to form the electrical circuit. Located between the anode-side electrode 6 and the cathode-side electrode 8 is an electrolyte membrane 5, which in this example permits the flow of hydrogen ions therethrough from the anode-side electrode 6 to the cathode-side electrode 8 to combine with oxygen in the diffusion layer 4 to form water.

Illustrated by arrows 1 and 3, a flow of hydrogen is flowed into the flow plate 10 (illustrated by arrow 1) resulting in residual gases and water which is flowed out of the flow plate at 3. On the other side of the fuel cell 2, fuel (here, oxygen) flows into the flow plate 10' at arrow 7 and out of the flow plate at arrow 9. Here, the structure of flow plates 10, 10' may differ slightly, and therefore each is designated a different reference numeral.

When a flow of hydrogen is provided at 1, the hydrogen flows through the flow plate 10, which then distributes the hydrogen through the diffusion layer 4 and towards the anode-side electrode 6. On reaching the anode-side electrode 6, the electrons of the diatomic hydrogen are deposited on the anode-side electrode 6 to produce positively charged hydrogen ions, which attracted from the anode-side electrode 6 to the cathode-side electrode 8 through the electrolyte membrane 5. Once at the cathode-side electrode 8, the hydrogen ions are able to bond with the oxygen, which has been flowed into the flow plate 10 at 7 and through the diffusion layer 4, to form water. The water may then be flowed out of the flow plate at 9.

It should be noted that above description applies to a fuel cell having hydrogen gas as a fuel. However, the skilled person will be aware that other types of fuel cells exist, such as those that function with hydrocarbons.

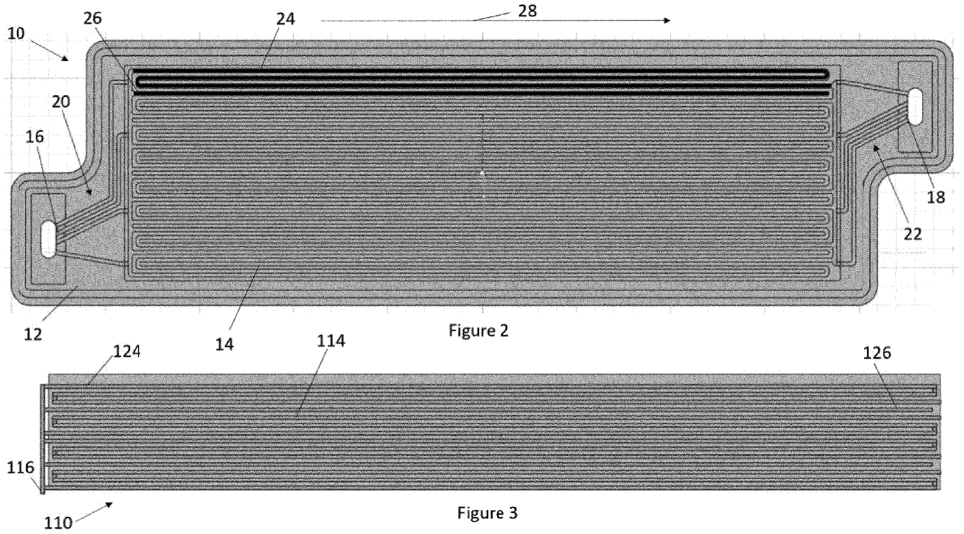

In Figure 2 there is illustrated a flow plate 10 for a fuel cell. The flow plate 10 comprises a substrate 12, a flow field 14 and a flow inlet 16 and outlet 18. The flow inlet 16 and flow outlet 18 are in fluid communication with the flow field 14, in this case via a respective inlet manifold 20 and outlet manifold 22. In use, a flow of fluid (e.g. fuel such as hydrogen) is introduced at the flow inlet 16, and in this example flows through the inlet manifold 20 and into the flow field 14. The fluid is then able to flow through the flow field 14 and into the outlet manifold 22 and finally the fluid outlet 18. As the fluid (e.g. the fuel) flows through the flow field 14, the fuel is provided to the fuel cell permitting the generation of energy.

In the example of Figure 2, the flow field 14 comprises a number of channels 24, 26 that are in fluid communication with the inlet manifold 20 and the outlet manifold 22. The channels 24, 26 are either in the form of a serpentine channel 24 or an interdigitated channel 26. One of each of a serpentine channel 24 and an interdigitated channel 26 is filled in with a dark line to highlight the shape of the channel within the flow field 14. In this example, the flow field comprises a plurality of serpentine channels 24 (here, 8 serpentine channels) rather than simply having one serpentine channel that spans the entire flow field. As such, the shorter length of the serpentine channels avoids a large pressure drop occurring in each serpentine channel 24. This is further achieved by limiting the number of turns in each serpentine channel 24. In this example, each serpentine channel 24 has two turns of 180 degrees, although it should be appreciated that serpentine channels having a differing number of turns may also be possible, for example four turns of 90 or 180 degrees may also be useful, however may provide a higher-than-desired pressure drop due to the additional number of turns. Other options also exist, for example two turns of 90 degrees, and it should be noted that a serpentine channel is not limited to a strictly S-shaped curve, but may simply be a channel comprising a change in flow direction therein. While each of the serpentine channels 24 are illustrated here as having an identical form, it should also be noted that having one or a plurality of serpentine channels 24 with a different form may additionally be possible.

The flow field 14 of this example is generally rectangular in form, and extends in a first flow direction, illustrated by arrow 28, and in a lateral direction that is located perpendicular to the flow direction 28. Each of the serpentine channels 24 extends principally in the flow direction 28, and each serpentine channel 24 has two short, curved sections that extend generally laterally to the flow direction 28 and change the flow direction of the channel 24 by 180 degrees. As such, each serpentine channel 24 begins at the end of the flow field 14 that is adjacent the flow inlet 16 and ends at the end of the flow filed 14 that is adjacent the flow outlet 18. In this example, one, some or each serpentine channel 24 may comprise an inlet portion that extends in the flow direction 28 and comprises an inlet to the serpentine channel 24, a midsection that is fluidly connected to the inlet portion by a curved section and which extends opposite to the flow direction 28, and an outlet portion which extends in the flow direction and comprises an outlet to the serpentine channel 24.

Located between the serpentine channels 24 are interdigitated channels 26. The interdigitated channels 26 are situated such that a serpentine channel 24 is located on each side of each interdigitated channel 26, and extend in the flow direction 28 along the flow field 14 of the flow plate 10. The interdigitated channels 26 each comprise an inlet which in this example is located adjacent the flow inlet 16 and/or the inlet manifold 20, although it may also be conceivable that the inlet is located adjacent the flow outlet 18 and/or the outlet manifold 22. Each interdigitated channel 26 also comprises a flow channel portion that, in this example, extends in the flow direction 28 and a closed end at the opposite end of the channel 26 compared to the inlet.

Here, each of the serpentine channels 24 is oriented such that the outlet portion is located adjacent an interdigitated channel 26, while the inlet portion is located adjacent an inlet portion of an adjacent serpentine channel 24. As the fuel flows along each of the serpentine channels 24, it becomes more depleted the closer it gets to the outlet of the serpentine channel 24. Therefore, positioning the interdigitated channels 26 such that they are adjacent an outlet portion permits a flow of fluid through the interdigitated channel 26 (which is generally shorter in length than the serpentine channels 24) in a region of the flow plate 10 in which the fuel in the adjacent serpentine channels 24 is depleted, therefore providing a more even distribution of fuel across the flow plate 10.

Figure 3 depicts a separate example of a flow plate 110 which is largely similar to that shown in Figure 2 and therefore alike reference numerals are used to describe each of the illustrated components, augmented by 100. As in the previous example, the flow plate 110 comprises a flow field 114 comprising a plurality of serpentine channels 124 and interdigitated channels 126. In this example, the manifold extends perpendicular to the flow direction 28 and has a more compact design as compared to that of Figure 2. Further, here only four serpentine channels 124 and two interdigitated channels 126 are illustrated, which further permits the flow plate 100 of Figure 3 to have a more compact design.

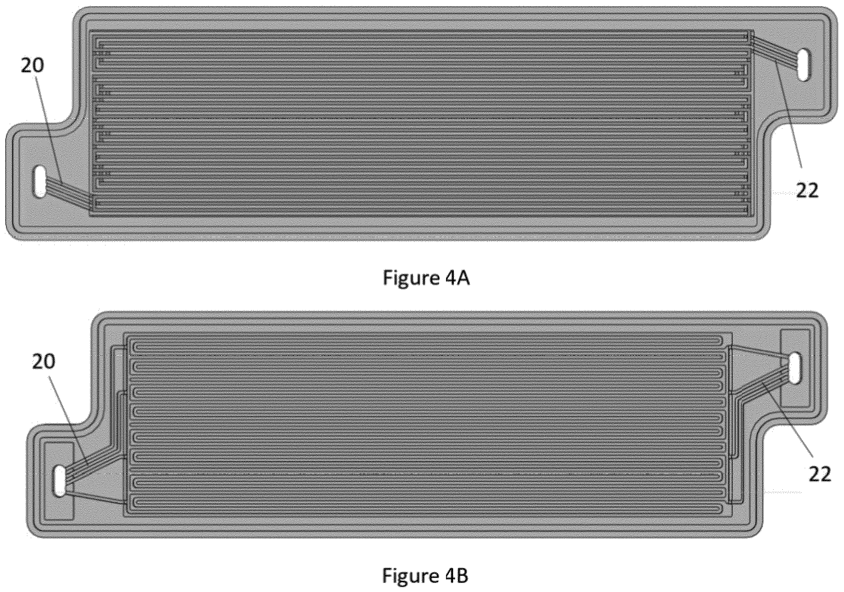

In Figures 4A and 4B, there illustrated a flow plate, similar to that shown in Figure 2, but with Figures 4A and 4B illustrating a contrasting inlet and outlet manifold 20, 22. In Figure 4B, the inlet and outlet manifolds 20, 22 distribute the flow from the flow inlet 16 to different locations of the flow field 14 in the direction perpendicular to the flow direction 28 which may provide a more even distribution of e.g. fuel to each of the plurality of serpentine channels 24 and interdigitated channels 26. In contrast, the inlet and outlet manifolds 20, 22 of Figure 4A provide the fuel and receive fuel along a much shorter length as compared to Figure 4B. In the example of Figure 4A, the fuel may be provided and received to/from the flow field at a corner thereof, and may then subsequently propagate throughout the remainder of the flow field.

## Claims

1. A flow plate (10) for a fuel cell, comprising:
a substrate (12) comprising a flow inlet (16) and a flow outlet (18);
a flow field (14) in fluid communication with both the flow inlet (16) and the flow outlet (18) comprising a plurality of flow channels;
the plurality of flow channels comprising at least two serpentine channels, each of the at least two serpentine channels defining a channel inlet and a channel outlet and comprising at least one curved section inducing a change in the flow direction in the respective serpentine channel;
the plurality of flow channels comprising an interdigitated channel extending between the at least two serpentine channels, and defining a channel inlet and a closed channel end.

2. The flow plate according to claim 1, wherein a first half of each of each of the plurality of serpentine channels defines an inlet portion, and a second half of each of the plurality of serpentine channels defines an outlet portion, and wherein the interdigitated channel is located adjacent the outlet portion of two of the at least two serpentine channels.

3. The flow plate according to claim 1 or 2, wherein each of the at least two serpentine channels comprises at least two straight sections fluidly connected by the at least one curved section, and the interdigitated section comprises a straight section.

4. The flow plate according to claim 3, wherein each of the at least two serpentine channels comprises three straight sections connected by two curved sections, and the interdigitated channel contains a single straight section.

5. The flow plate according to claim 3 or 4, wherein the straight sections of the at least two serpentine channels are parallel to the straight section of the interdigitated channel.

6. The flow plate according to claim 4 or 5, wherein each of the two curved sections induces a change in the flow direction of 180 degrees.

7. The flow plate according to any preceding claim, comprising an inlet channel fluidly connecting the flow field to the flow inlet, and comprising an outlet channel fluidly connecting the flow field to the flow outlet.

8. The flow plate according to claim 7, comprising a plurality of inlet channels defining an inlet manifold, and comprising a plurality of outlet channels defining an outlet manifold.

9. The flow plate according to any preceding claim, comprising a plurality of interdigitated channels and at least four serpentine channels, wherein each of the plurality of interdigitated channels is located between two of the at least four serpentine channels.

10. The flow plate according to any preceding claim, wherein the number of serpentine channels is double the number of interdigitated channels.

11. The flow plate according to any preceding claim, wherein the channel inlet of the interdigitated channel is located closer to the inlet than the outlet.

12. The flow plate according to any of claims 1 to 10, wherein the channel inlet of the interdigitated channel is located closer to the outlet than the inlet.

13. The flow plate according to any preceding claim, wherein the interdigitated channel extends in a flow direction, and the flow inlet and flow inlet are separated along the flow direction.

14. A method of operation of a fuel cell, comprising:
providing a fuel cell comprising a flow plate according to claim 1;
flowing a fuel into the flow inlet of the flow plate and into the flow field of the fuel cell; and
flowing a fuel simultaneously into the at least two serpentine channels and the interdigitated channel of the fuel cell.
